# NOUVEAU FASCICULE DE BREVET EUROPEEN

(11) **EP 1 159 879 B2**
(45) Date de publication et mention de la décision concernant l'opposition: **16.07.2014**
(45) Mention de la délivrance du brevet: 27.05.2009
(21) Numéro de dépôt: 00201932.1
(22) Date de dépôt: 31.05.2000
(51) Int. Cl.: A23G 9/26

(54) **Procédé de préparation d'un article de confiserie glacée**
Verfahrung zur Herstellung von Speiseeis
Method of manufacture of ice cream

(43) Date de publication de la demande: 05.12.2001
(73) Titulaire: SOCIETE DES PRODUITS NESTLE S.A., 1800 Vevey (CH)
(72) Inventeur: Cathenaut, Philip Igor, 95440 Ecouen (FR); Cossin, Véronique, 60000 Beauvais (FR); Delande, Bruno, 60690 Marseille en Beauvaisis (FR)
(74) Mandataire: Rupp, Christian

(56) Documents cités:
- EP-A- 0 500 940
- WO-A-95/20883
- WO-A-98/04149
- WO-A1-01/06865
- WO-A1-97/45022
- WO-A1-99/38386
- US-A- 2 360 559
- US-A- 2 747 525
- US-A- 4 724 153
- PATENT ABSTRACTS OF JAPAN vol. 1996, no. 10, 31 octobre 1996 (1996-10-31) & JP 08 140583 A (MEIJI MILK PROD CO LTD), 4 juin 1996 (1996-06-04)

## Description

L'invention se rapporte à un procédé de préparation d'articles de confiserie glacée à base de glace à l'eau. Elle a trait plus particulièrement à un procédé de préparation d'article de confiserie glacée moulé à base de glace à l'eau de texture tendre à coeur.

Les articles de confiserie glacée du genre des glaces à l'eau sont en général fabriqués par remplissage d'une composition pour glace à l'eau liquide à température positive, de l'ordre de 2-3 ° C, dans des moules généralement en métal conducteur thermique, circulant dans une ambiance réfrigérante qui provoque la congélation lente par conduction de la composition pour glace à l'eau. L'ambiance réfrigérante peut être un bain de réfigérant liquide, par exemple la saumure ou un tunnel de congélation à circulation d'air froid dans lequel les moules circulent.

Une fois congelés, les articles peuvent être laissés dans les moules qui servent en même temps de conditionnement, par exemple dans le cas des petits cylindres avec dispositif "push-up" ou des étuis souples en forme de cylindre applati à l'une des ses extrémités.

On peut également insérer un bâtonnet dans la masse de la composition glacée non encore solidifiée à coeur, continuer la solidifiation, démouler les articles par action de la chaleur sur la surface extérieure du moule, les durcir puis les emballer, par exemple en sachet souple ou "flow-pack".

De tels articles moulés ont généralement une texture dure due à la congélation lente et progressive par conduction, génératrice de gros cristaux de glace. On connait des articles de confiserie glacée composites dont la texture est tendre, constitués notamment d'un coeur en crème glacée foisonnée extrudé enrobé d'une composition de glace à l'eau, décrits par exemple dans EP-A-0710074 ou WO-A-9804149. La texture tendre de l'enrobage est obtenue dans ces procédés par immersion du coeur extrudé prérefroidi, dans une composition pour glace à l'eau et refroidissement très rapide à une température < -15° C, par exemple par trempage dans l'azote liquide de manière à durcir l'enrobage. Il est généralement nécessaire d'effectuer plusieurs cycles de trempage et durcissement successifs pour obtenur l'épaisseur d'enrobage désirée.

L'invention se propose de mettre à disposition un article de confiserie glacée à base de glace à l'eau, notamment moulé et de texture souple.

L'article comprend:
i) Un coeur de glace à l'eau contenant 20 à 40 % en poids de matières sèches, foisonné à un taux de 20 à 80 % et dont la texture est semblable à celle d'une crème glacée extrudée et
ii) Une coque de glace à l'eau non foisonnée contenant de 20 à 35 % en poids de matières sèches.

Une particularité du coeur de glace à l'eau est qu'il contient un stabilisant à propriétés gélifiantes qui peut être choisi parmi la gomme de caroube, la gomme xanthane, la gomme guar, la gomme tara, le carboxyméthyl cellulose, la gélatine, les alginates, le carraghénane, les amidons, les pectines, la cellulose microcristalline ou un mélange de tels ingrédients.

On utilise de préférence les gommes xanthane, de caroube, la gélatine et les pectines et plus spécifiquement un mélange comprenant la gomme xanthane et la gomme de caroube, la gomme xanthane étant prédominante, ou comprenant la gélatine et la gomme de caroube, la gélatine étant prédominante.

Le taux du mélange stabilisant est < ou = 0,5 % en poids et est de préférence 0,3 à 0,4 % en poids.

La nature et le taux du mélange stabilisant en combinaison avec la teneur en matières sèches du coeur lui permettent de pouvoir être traité et foisonné en freezer et lui confèrent une texture semblable à celle de la crème glacée extrudée sortant du freezer à environ -5, -6° C.

Dans le contexte de l'invention, le taux de foisonnement peut être défini comme l'augmentation de volume du mix due à l'incorporation d'air exprimé en % en volume. Il est de préférence 30 à 50 %.

Avantageusement, le coeur a un taux de matières sèches de 28 à 32 % en poids.

En plus du mélange stabilisant, les dites matières sèches du coeur proviennent avantageusement:
pour jusqu'à 20 % en poids de purée de fruit, d'arôme et de colorant et
pour 20 à 27 % en poids d'hydrates de carbone, dont jusqu'à 7 % en poids de sirop de glucose.

On peut ainsi utiliser une purée de fruits ou en variante un arôme de fruit et un colorant.

La composition de la glace à l'eau de la coque doit être telle que sa texture soit ferme sans être trop dure. Elle n'a pas d'air incorporé autrement que comme résultat du mélange de ses composants c'est à dire qu'elle n'est pas foisonnée.

Les dites matières sèches de la coque constituent de préférence 25 à 30 % du poids de la coquille et proviennent avantageusement:
pour 3 à 5 % en poids de purée de fruit ou de jus de fruit, d'arôme et de colorant,
pour 0,35 à 0,45 % en poids de stabilisant à propriétés viscosantes et pour 20 à 26 % en poids d'hydrates de carbone.

Le stabilisant à propriétés viscosantes peut être choisi parmi la gomme de guar, la gomme de caroube, la gomme xanthane, la carboxyméthyl cellulose, les pectines, les carraghénanes, les amidons ou les mélanges de ces ingrédients, la gomme de guar étant préférée.

La coque peut contenir des extraits d'épices, de café, de cacao, du miel ou un sirop, par exemple d'érable ou un arôme d'alcool ou de liqueur.

Les hydrates de carbone de la coque sont avantageusement constitués de sucrose, ce dernier étant prédominant, de sirop de glucose et de 8 à 10 % de sucre inverti.

L'article de confiserie glacé est une sucette glacée dont le coeur et la coque ont une couleur et un arôme à base de fruit, et contiennent de préférence une quantité importante de fruit, notamment un extrait, par exemple une purée de fruit ou un arôme de fruit.

La sucette glacée peut de préférence avoir la forme d'un tronc de cône à base et à section ovales avec un sommet arrondi et un volume de 60 à 120 ml.

Le coeur et la coque peuvent constituer un contraste ou une association de goûts, par exemple en associant un arôme de fruit, par exemple acide et un extrait aromatique d'un alcool ou d'une liqueur.

Le coeur peut contenir des inclusions, des morceaux de fruits, secs ou confits, de gel, de fondant, de croquant, de sauce, de caramel, de chocolat, de confiserie sucrée ou de biscuits et avantageusement de préférence des morceaux ou brisures de fruit, par exemple du même fruit contenu, par exemple sous forme de purée dans la masse du coeur.

On peut choisir les sucres et les stabilisants de la coque de manière à réaliser un contraste de texture plus ou moins sensible avec le coeur. La coque ne sert pas uniquement à maintenir la forme du produit, mais peut également garantir une bonne résistance à la fonte et aux chocs thermiques. On peut ainsi y ajouter d'autres stabilisants tels que par exemple les pectines ou les amidons.

L'épaisseur de la coque est 1 à 5 mm et de préférence 2 à 3 mm.

L'invention concerne un procédé de préparation d'un article de confiserie glacée composite précédent, dans lequel
on remplit un moule, maintenu dans une atmosphère réfrigérée, avec une composition de glace à l'eau non foisonnée liquide,
on refroidit le moule de manière à former une coque ouverte par congélation de la dite composition liquide au contact de la paroi intérieure du moule et on soutire le centre encore liquide de la dite composition,
on introduit dans la coque ouverte une composition de glace à l'eau congelée et foisonnée à un taux de 20 à 80 % constituant le coeur de l'article,
on introduit le cas échéant un bâtonnet,
on complète la formation de la coque en ajoutant la quantité nécessaire de la dite composition de glace à l'eau liquide avant ou après l'insertion du bâtonnet,
on durcit et on démoule l'article.

Le dosage de la composition de glace à l'eau constituant le coeur de l'article nécessite des moyens spécifiques permettant de remplir les moules ou les cavités créés par la méthode "shell and core" avec une matière relativement dure et visqueuse, qui contient le cas échéant des inclusions de dimension de 1 à 10 mm sans formation de poches d'air, c'est à dire jusqu'au fond des moules.

Les dits moyens spécifiques peuvent être constitués d'un distributeur/répartiteur relié au freezer maintenu sous pression par le freezer et associé à un dispositif doseur.

Dans le contexte de l'invention, une matière relativement dure et visqueuse est une glace à l'eau à - 2° C, - 6° C, de préférence à - 5° C, - 6° C, foisonnée sortant d'un freezer. Sa texture est plus ferme et elle a un pourcentage d'eau congelée par rapport à l'eau totale de la recette qui est plus élevé qu'une composition liquide à glacer habituelle, et ceci de manière plus ou moins prononcée selon la composition du mélange à congeler.

Les dits moyens spécifiques peuvent être appliqués à toute machine de congélation d'articles de confiserie glacée telle que, par exemple:
Une machine de congélation en saumure, rectiligne, rotative, ovale ou en mouvement carré,
Une machine de congélation utilisant un fluide frigorigène liquide, gazeux ou en évaporation, qui baigne les moules ou les asperge pendant plus ou moins longtemps,
Une machine dans laquelle les moules sont transportés par un convoyeur dans un tunnel à air pulsé assurant la surgélation, le convoyeur pouvant être rectiligne ou s'enrouler, par exemple en simple ou en double hélice, applatie ou de révolution, Toute machine de type précédent dans laquelle le déplacement des moules est continu ou pas à pas.

Ainsi les moyens spécifiques peuvent être appliqués d'une manière très simple aux machines existantes.

Ce principe du dosage sous pression peut s'appliquer à différents types de doseuses tels que, par exemple les doseuses à boisseau de distribution et à cylindres verticaux ou horizontaux, les doseuses à soupapes ou de préférence les doseuses à buses plongeantes du type "bottom-up filler" associées à des dispositifs de monte et baisse et couplées à une vanne rotative. Le couple temps d'ouverture de la vanne/pression du mix congelé définit la quantité dosée.

Lorsque l'on met en oeuvre un dosage multipistes, la glace est répartie de manière homogène entre les différentes conduites de sortie d'un distributeur/répartiteur et peut gaver les doseuses sans création de poche d'air. Le dispositif de monte et baisse assure le remplissage complet du moule sans création de poche d'air.

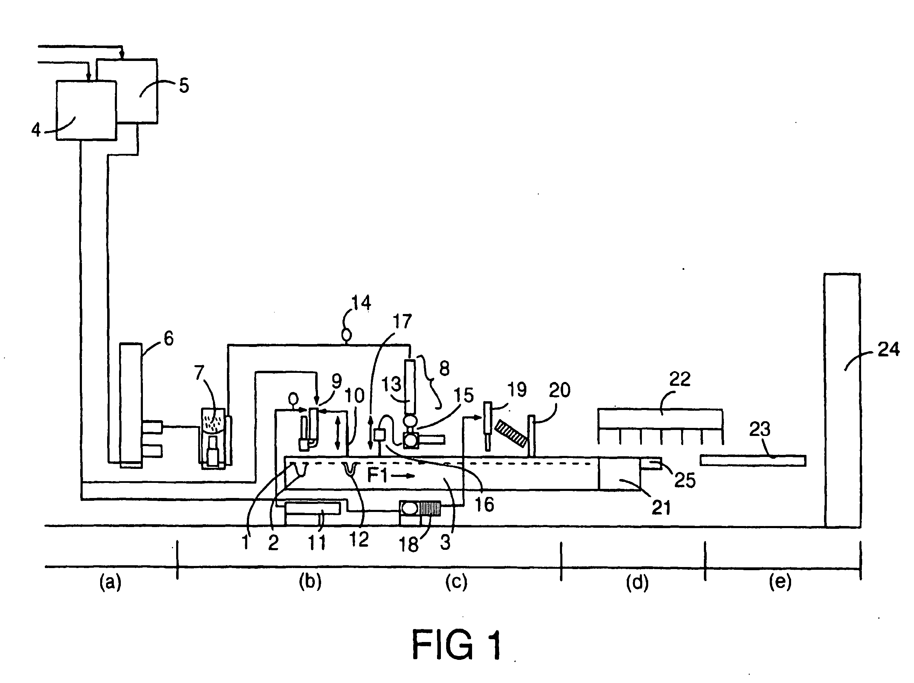

La mise en oeuvre du procédé est décrite ci-après à titre d'exemple en liaison avec le dessin annexé relatif à un mode de réalisation préférentiel, dans lequel la figure 1 est une représentation schématique d'une ligne de fabrication, avec représentation d'une piste de dosage seulement par souci de clarté.

Comme montré à la figure 1, pour mettre en oeuvre le procédé, on utilise de préférence une ligne de moulage classique constituée d'une table 1 de moules 2 en mouvement de translation horizontale pas à pas selon f1, cheminant successivement dans un bain réfrigérant 3, par exemple de saumure à environ - 40° C pour les opérations de remplissage des moules (b) et de congélation (c) et dans une zone d'aspersion de saumure, d'eau ou de vapeur assurant un réchauffage des moules suffisant au démoulage et à l'extraction (d) des articles.

Pour la préparation des sorbets (a), on prépare le mix de la coque dans le tank 4 et celui du coeur dans le tank 5 selon un mode de pasteurisation classique après homogénéisation et maturation à environ 4° C pendant environ 4 h. Le tank 5 est relié au freezer 6 et des inclusions sont introduites et mélangées dans le mix congelé sortant du freezer au moyen d'un dispositif d'alimentation 7. A la sortie du dispositif 7 le mix congelé contenant les inclusions est dirigé vers le dispositif de dosage du coeur 8.

Dans un premier temps, une doseuse de type volumétrique 9 assure un remplissage en ligne et de façon simultané des moules d'une même ligne avec le mix de la coque venant du tank 4. Un dispositif monte et baisse 10 relié à une pompe à vide 11 (ou un système de seringues non représenté) assure l'aspiration de la partie centrale du mix non congelé à une distance du premier dosage qui conditionne, avec la vitesse d'avancement de la table, l'épaisseur de la coque 12.

L'étape de dosage du coeur suit celle de formation de la coque. En fonctionnement, un distributeur/ répartiteur statique ou dynamique 13, par exemple avec un élément mélangeur interne assurant une répartition homogène du mix congelé. Le distributeur/répartiteur 13 est alimenté en continu par le freezer 6, et le débit comparé à une valeur de consigne qui peut générer un signal qui agit sur la fermeture d'une vanne 14 ou sur la réduction de la vitesse de la pompe d'alimentation en produit venant du freezer de manière à diminuer son débit. Le distributeur/répartiteur assure ainsi la conduite du mix congelé contenant les inclusions d'une manière homogène aux orifices dont le nombre est identique à celui des têtes de dosage. La vitesse de rotation du mélangeur dynamique peut varier, par exemple de 30 à 90 tours par minute.

Le système de dosage du coeur est constitué d'un vérin (non représenté), d'une vanne rotative tournant dans un boisseau 15 et de buses de dosage temporisé 16. La quantité dosée est fonction de la pression apportée par le freezer et du temps d'ouverture de la vanne rotative. Les buses de dosage 16 sont mobiles en translation verticale au moyen d'un dispositif monte et baisse 17. La fonction monte et baisse assure une répartition de la masse visqueuse du mix congelé de la base au sommet du moule, le dosage ayant lieu en montant. Le mouvement vertical de la buse est assuré par un vérin dont la course est adaptée de manière que la distance parcourue par la buse à partir d'un niveau bas proche du fond du moule jusqu'au niveau supérieur de remplissage du moule. On peut prévoir un système permettant d'éviter la formation d'une queue de dosage, par exemple par tout moyen assurant une accélération de la remontée de la buse en fin de course ou une dépression dans la buse.

Après dosage du coeur, un dosage additionnel avec le mix de la coque, venant du tank 4, de préférence refroidi entre 0° C et + 4° C par réchangeur 18, assure la fermeture de la dite coque au moyen de la doseuse 19. Ce dosage peut être précédé ou suivi d'un bâtonnage au poste 20. Dans les deux cas, le coeur est suffisamment visqueux pour que le bâtonnage puisse se faire dans un délai très court après le dosage du coeur.

Une fois l'ensemble durci, on le démoule par réchauffage superficiel du moule en 21 et on l'extrait dans la zone (d). Le produit composite est repris par la chaîne 22, enveloppé en 23 et entreposé en 24 à - 30° C, -35° C dans la zone d'emballage et d'entreposage (e).

Les avantages apportés par le procédé par rapport aux procédés de moulage traditionnels sont multiples:
On peut doser la glace à coeur qui contient plus d'eau à l'état congelé que traditionnellement avec une amélioration correspondante de la texture qui est celle que l'on ne trouve habituellement que dans les articles extrudés.
Le temps de congélation peut être réduit d'environ 25 %, ce qui permet une plus grande cadence et une meilleure productivité de la ligne.
La viscosité de la glace est telle que les inclusions qu'elle contient le cas échéant peuvent être réparties de manière uniforme sans décanter comme dans le cas d'une glace dosée liquide.
On peut fabriquer des articles dits "tridimentionnels" ou "indémoulables" en utilisant des moules en plusieurs parties.

On peut prévoir que l'environnement réfrigéré de la ligne de moulage est très froid, de sorte qu'une fois durci dans le moule, l'article n'adhère pas à la paroi et peut être démoulé sans qu'il ne soit nécessaire de chauffer le moule en surface.

Les articles, en étant plus froids, peuvent alors être plus facilement enrobés.

Les exemples ci-après illustrent l'invention. Dans ceux-ci, les parties et pourcentages sont pondéraux, sauf indication contraire.

### Exemple 1

### Préparation d'un bâtonnet glacé "shell and core"

1. On prépare un mix pour sorbet framboise qui constitue la glace à l'eau du coeur à partir des ingrédients suivants, dans les proportions indiquées:

| Ingrédient | % |
|---|---|
| Eau | 55,82 |
| Sirop de glucose | 6,32 |
| Gomme xanthane | 0,18 |
| Gomme de caroube | 0,12 |
| Trisodium citrate | 0,3 |
| Acide citrique | 0,25 |
| Sucrose cristallisé | 20,4 |
| Purée de framboise | 16 |
| Arôme de framboise | 0,16 |
| Colorant rouge naturel | 0,25 |
| Lactoprotéines | 0,2 |

On mélange les ingrédients à température supérieure ou égale à 60° C sous agitation, jusqu'à obtenir une dissolution et une hydratation appropriée, on homogénéise et on pasteurise le mix puis on le refroidit et on le laisse maturer à + 4° C sous agitation lente. Après passage dans un freezer avec aération, on obtient une composition congelée de glace à l'eau foisonnée à 40 %, de température -5 à -6° C.

On ajoute à la masse foisonnée 10 % de petits morceaux de framboise écrasée passés au travers d'un tamis de mailles de dimension environ 0,8 mm.

2. On prépare un mix pour glace à l'eau qui constitue la coque à partir des ingrédients ci-après, dans les proportions indiquées:

| Ingrédient | % |
|---|---|
| Eau | 68 |
| Gomme guar | 0,4 |
| Sirop de glucose | 6,3 |
| Sucrose cristallisé | 19,6 |
| Purée de framboise | 5 |
| Acide citrique | 0,22 |
| Arôme de framboise | 0,13 |
| Colorant rouge naturel | 0,35 |

On mélange les ingrédients à température supérieure ou égale à 60° C sous agitation, jusqu'à obtenir une dissolution et une hydratation appropriée, on homogénéise et on pasteurise le mix puis on le refroidit à + 4° C.

3. On remplit de mix de glace à l'eau liquide préparé selon 2 ci-dessus à + 4° C des moules pour bâtonnets glacés de section ovale avec un fond arrondi que l'on plonge dans une saumure à -35° C. Après formation d'une couche congelée d'environ 2 mm d'épaisseur au voisinage de la paroi latérale des moules, on soutire le liquide du centre, ce qui forme des cavités de glace.

On remplit les cavités formées avec le mix congelé foisonné préparé selon 1 ci-dessus à -5° C, -6° C par l'intermédiaire d'un distributeur/répartiteur sous pression de 2 bar relié à un dispositif doseur temporisé à buse plongeante qui descend au fond des cavités et les remplit tout en remontant, ce qui évite la formation de poches d'air. On dose un complément de mix préparé selon 2 ci-dessus, refroidi entre 0° C et + 4° C de manière à fermer les cavités et à compléter les coques, on insère un bâtonnet au centre encore semi-congelé et on poursuit la congélation. Après solidification de ce complément, on réchauffe la paroi extérieure des moules, on extrait les articles, on les enveloppe et on les durcit à -30° C, -35° C.

### Exemple 2

### Préparation d'un bâtonnet glacé "shell and core"

En procédant comme à l'exemple 1, on fabrique un bâtonnet glacé composite à partir d'un mix 1 pour sorbet orange qui constitue la glace à l'eau du coeur préparé à partir des ingrédients suivants, dans les proportions indiquées:

| Ingrédient | % |
|---|---|
| Eau | 69,608 |
| Sirop de glucose | 6,3 |
| Gomme xanthane | 0,24 |
| Gomme de caroube | 0,16 |
| Trisodium citrate | 0,4 |
| Acide citrique | 0,41 |
| Sucrose cristallisé | 20,6 |
| Jus d'orange concentré | 2 |
| Arôme d'orange | 0,07 |
| Colorant jaune et carotène | 0,012 |
| Lactoprotéines | 0,2 |

Et d'un mix 2 constituant la coque préparé à partir des ingrédients suivants dans les proportions indiquées:

| Ingrédient | % |
|---|---|
| Eau | 72,78 |
| Gomme guar | 0,4 |
| Sirop de glucose | 6,3 |
| Sucrose cristallisé | 18 |
| Jus d'orange concentré | 2 |
| Acide citrique | 0,41 |
| Arôme d'orange | 0,07 |
| Colorant jaune et carotène | 0,04 |

## Revendications

1. Procédé de preparation d'un article de confiserie glacée moulé à base de glace à l'eau de texture tendre à coeur, comprenant (i) un coeur de glace à l'eau contenant 20 à 40% en poids de matières sèches, foisonné à un taux de 20 à 80% et dont la texture est semblable à celle d'une crème glacée extrudée, et (ii) une coque de glace à l'eau non foisonnée contenant 20 à 35% en poids de matières sèches,
dans lequel on remplit un moule, maintenu à une atmosphere réfrigérée, avec une composition de glace à l'eau non foisonnée liquide,
on refroidit le moule de manière à former une coque ouverte par congélation de la dite composition liquide au contact de la paroi intérieure du moule et on soutire le centre encore liquide de la dite composition,
on introduit dans la coque ouverte une composition de glace à l'eau congelée foisonnée à un taux de 20 à 80%,
constituant le coeur de l'article,
on introduit le cas échéant un bâtonnet,
on complète la formation de la coque en ajoutant la quantité nécessaire de la dite composition de glace à l'eau liquide avant ou après l'insertion du bâtonnet on durcit et on démoule l'article.

2. Procédé selon la revendication 1 **caracterisé par le fait que** l'on dose la glace constituant le coeur à partir d'un distributeur/répartiteur muni de moyens de mélange associé à un dispositif doseur plongeur, que le distributeur/répartiteur est maintenu sous pression en amont du dispositif doseur et que le dispositif doseur descend au fond des moules ou des coques ouvertes et les remplit tout en remontant, ce qui permet de remplir les moules ou les coques sans formation de poches d'air.

3. Procédé selon l'une des revendications 1 ou 2, **caracterisé par le fait que** l'on remplit la composition du coeur à -2°C, -6°C, de préférence à -5°C, -6°C.

4. Procédé selon l'une des revendications 1 à 3, **caracterisé par le fait que** l'on introduit la composition du coeur dans le distributeur/répartiteur sous une pression de gaz, notamment d'air de 1.5 à 2 bar.

## Patentansprüche

1. Verfahren zur Herstellung eines geformten gefrorenen Süßwarenartikels auf der Basis von Wassereis mit im Kern weicher Textur, umfassend
(i) einen Kern aus Wassereis, der 20 bis 40 Gew.-% Trockenmassen enthält und mit einem Aufschlag von 20 bis 80 % aufgeschäumt ist und dessen Textur derjenigen eines extrudierten Sahneeises ähnlich ist, und
(ii) eine Schale aus nicht aufgeschäumtem Wassereis, das 20 bis 35 Gew.-% Trockenmassen enthält,
bei dem
man eine in einer gekühlten Atmosphäre gehaltene Form mit einer flüssigen, nicht aufgeschäumten Wassereiszusammensetzung befüllt,
man die Form so kühlt, dass durch Gefrieren der flüssigen Zusammensetzung im Kontakt mit der Innenwand der Form eine offene Schale gebildet wird, und man das noch flüssige Zentrum der Zusammensetzung abzieht,
man in die offene Schale eine mit einem Aufschlag von 20 bis 80 % aufgeschäumte gefrorene Wassereiszusammensetzung einführt, die den Kern des Artikels bildet, man gegebenenfalls einen Stiel einführt,
man die Bildung der Schale vervollständigt, indem man die erforderliche Menge an flüssiger Wassereiszusammensetzung vor oder nach Einführen des Stiels hinzufügt, man den Artikel härtet und ihn entformt.

2. Verfahren nach Anspruch 1,
**dadurch gekennzeichnet, dass** man das den Kern bildende Eis aus einem Spender/Verteiler zudosiert, der mit Mischmitteln versehen ist und dem eine Tauch-Dosiervorrichtung zugeordnet ist, dass der Spender/Verteiler stromauf der Dosiervorrichtung unter Druck gehalten wird und dass die Dosiervorrichtung zum Boden der Formen oder der offenen Schalen herunterbewegt wird und sie bei der Wiederaufwärtsbewegung befüllt, was die Befüllung der Formen oder Schalen ohne Bildung von Lufttaschen gestattet.

3. Verfahren nach einem der Ansprüche 1 oder 2,
**dadurch gekennzeichnet, dass** man die Zusammensetzung des Kerns bei -2°C, -6°C, vorzugsweise bei -5°C, -6°C einfüllt.

4. Verfahren nach einem der Ansprüche 1 bis 3,
**dadurch gekennzeichnet, dass** man die Zusammensetzung des Kerns in den Spender/Verteiler unter einem Gasdruck, insbesondere Luftdruck, von 1,5 bis 2 bar einführt.

## Claims

1. A process for preparing a moulded frozen confectionery product based on water ice and having a soft-core texture, comprising
(i) a core of water ice containing 20 to 40 wt.% solids, having a degree of overrun of 20 to 80% and having a texture that is similar to that of an extruded ice cream, and
(ii) a shell of water ice having no overrun and containing from 20 to 35 wt.% solids, wherein
a mould, kept in a refrigerated atmosphere, is filled with a liquid water ice composition having no overrun,
the mould is cooled so as to form an open shell by the freezing of said liquid composition on contact with the interior wall of the mould and the still liquid centre of said composition is withdrawn,
a frozen water ice composition with a degree of overrun of 20 to 80%, constituting the core of the product, is introduced into the open shell,
a stick is optionally introduced,
the forming of the shell is completed by adding the required quantity of said liquid water ice composition before or after inserting the stick and the product is hardened and demoulded.

2. The process according to claim 1,
**characterised in that** the ice constituting the core is metered from a dispenser/distributor equipped with mixing means associated to a metering plunger device, **in that** the dispenser/distributor is maintained under pressure upstream of the metering device and **in that** the metering device descends to the bottom of the moulds or of the open shells and fills them while ascending, which makes it possible to fill the moulds or the shells without the formation of air pockets.

3. The process according to one of claims 1 to 2,
**characterised in that** the core composition is filled at -2°C, -6°C, preferably at -5°C, - 6°C.

4. The process according to one of claims 1 to 3,
**characterised in that** the core composition is introduced into the dispenser/distributor under gas pressure, particularly air pressure of 1.5 to 2 bar.
